# EUROPÄISCHE PATENTANMELDUNG

(11) **EP 4 503 365 A1**
(43) Veröffentlichungstag der Anmeldung: **05.02.2025**
(21) Anmeldenummer: 23189233.2
(22) Anmeldetag: 02.08.2023
(51) Int. Cl.: H02J 3/38

(54) **ANORDNUNG SOWIE SYSTEM ZUR REGELUNG DER EINSPEISUNG EINER SOLARENERGIEERZEUGENDEN EINHEIT**

(71) Anmelder: Albrecht Jung GmbH & Co. KG, 58579 Schalksmühle (DE)
(72) Erfinder: Biniossek, Nik, 58099 Hagen (DE); Jörgens, Stefan, 58579 Schalksmühle (DE); Biller, Marius, 58095 Hagen (DE)
(74) Vertreter: Fobbe, Tobias

(57) **Zusammenfassung**

Zu dem Zweck, eine Anordnung zur Regelung der Einspeisung einer solarenergieerzeugenden Einheit PV zu schaffen, die es ermöglicht, Spitzenleistungen von über 600W in einen Lastkreis LK einzuspeisen, ohne dass die betroffene Leitung überhitzt und damit einerseits der Einsatz kostspieliger Batterien vermieden wird und sogar ein substantiell über die Grundlast hinausgehender Leistungsbedarf abgedeckt werden kann, wird eine Anordnung umfassend eine solarenergieerzeugende Einheit PV mit einem Wechselrichter und eine daran angeschlossene, eine Einspeisung in einen Lastkreis LK ermöglichende, Steckdose SD vorgestellt, die ferner eine Netzversorgungsleitung N umfasst, die über einen Stromzähler Z und einen lastkreisspezifischen Leistungsschutzschalter LS in den Lastkreis LK mündet, wobei der Lastkreis LK eine Messeinrichtung ME aufweist, die die aktuelle Stromstärke im Lastkreis LK ermittelt.

Besonderes Kennzeichen dieser Anordnung ist, dass die Steckdose SD an einen die Einspeisung regelnden Schaltaktor SA angeschlossen ist, wobei die Einspeisung vermieden wird, wenn die aktuelle Stromstärke im Lastkreis LK einen definierbaren Wert überschreitet.

## Beschreibung

Die Erfindung betrifft eine Anordnung zur Regelung der Einspeisung einer solarenergieerzeugenden Einheit umfassend eine solarenergieerzeugende Einheit mit einem Wechselrichter und eine daran angeschlossene, eine Einspeisung in einen Lastkreis ermöglichende, Steckdose sowie ferner umfassend eine Netzversorgungsleitung, die über einen Stromzähler und eine einen lastkreisspezifischen Leistungsschutzschalter in den Lastkreis mündet.

Ferner betrifft die Erfindung ein System zur Regelung der Einspeisung einer solarenergieerzeugenden Einheit umfassend mindestens zwei solche Anordnungen.

Aus dem Stand der Technik vorbekannt sind sogenannte Balkonkraftwerke. Hierbei wird mit einer - typischerweise auf dem Balkon angeordneten - solarenergieerzeugenden Einheit, insbesondere umfassend ein oder mehrere Photovoltaikmodule, im Zusammenspiel mit einem (Mikro-)Wechselrichter, der den durch die solarenergieerzeugende Einheit erzeugten Gleichstrom in Wechselstrom umwandelt, eine Einspeisung von Strom in einen Laststromkreis (auch Endstromkreis genannt) eines Gebäudes - insbesondere über eine Steckdose - vorgenommen, um beispielsweise annähernd die Grundlast eines Gebäudes zu decken.

Problematisch dabei ist, dass derzeit gesetzliche Vorgaben bestehen, die es verunmöglichen, Balkonkraftwerke mit mehr als 600W Spitzenleistung zu nutzen. Derartige Vorgaben werden unter anderem damit begründet, dass durch eine größere Einspeisung als 600W die maximale Stromstärke im Lastkreis über 18,6 A ansteigen würde, so dass ein typisches Kabel mit 1,5 mm2 Querschnitt sich zu stark erwärmen würde. Die maximal erlaubte Einspeisung ist also auf die höchste erreichbare Einspeiseleistung ausgelegt, welche gleichzeitig zu dem unwahrscheinlichen Extremfall vorkommt, in dem Verbraucher extreme, kurzschlussartige Lasten beziehen. Insofern sind derzeit sogenannte Balkonkraftwerke bezüglich der maximal erreichbaren Spitzenleistung stark beschränkt, so dass insbesondere im Fall von geringerer Sonneneinstrahlung (bspw. bei Bewölkung) die Grundlast nur unzureichend gedeckt werden kann beziehungsweise eine kostspielige Batterie vorzusehen ist. Zudem erlaubt das vorstehend beschriebene Limit der Spitzenleistung keine effektive Bereitstellung von Leistung für elektrische Verbraucher, die über die Grundlast hinausgehen, beispielsweise Waschmaschinen, Spülmaschinen, Trockner oder dergleichen.

Andererseits besteht bei einem nicht unerheblichen Anteil von Hauseigentümern, insbesondere Vermietern, der Wunsch, dass sichergestellt ist, dass keinerlei signifikante Einspeisung von Strom in einen Laststromkreis eines Gebäudes - insbesondere über eine Steckdose in Verbindung mit einer solarenergieerzeugenden Einheitvorgenommen werden kann. Ein solcher Wunsch kann darin begründet sein, dass ein Mieter keine Änderung an der Fassade oder einem Balkon vornimmt, um eine solarenergieerzeugenden Einheit in Betrieb zu nehmen oder dass ein Mieter keine die Stromleitung überlastende Einspeisung vornehmen kann, die mit erheblichen Sicherheitsrisiken einhergehen kann.

Ausgehend von diesem diskutierten Stand der Technik liegt der Erfindung die Aufgabe zugrunde, eine Anordnung zur Regelung der Einspeisung einer solarenergieerzeugenden Einheit zu schaffen, die es auf einfache Weise ermöglicht, entweder Spitzenleistungen von über 600W in einen Lastkreis einzuspeisen, ohne dessen Leitungen zu überlasten oder jegliche Einspeisung von Strom in einen Laststromkreis eines Gebäudes effektiv zu vermeiden.

Gelöst wird diese Aufgabe durch eine Anordnung zur Regelung der Einspeisung einer solarenergieerzeugenden Einheit, wobei die Steckdose an einen die Einspeisung regelnden Schaltaktor angeschlossen ist, wobei die Einspeisung vermieden wird, wenn die aktuelle Stromstärke im Lastkreis einen definierbaren Wert überschreitet, wobei die Steckdose einen Messsensor zur Erfassung der Einspeisung aufweist und die Einspeisung in die Steuerung des Schaltaktors mit einfließt.

Der Kerngedanke der Erfindung besteht einerseits darin, dass zur Vermeidung jeglicher signifikanter Einspeisung, die Steckdose an einen die Einspeisung regelnden Schaltaktor angeschlossen ist, wobei die Einspeisung vermieden wird, wenn die aktuelle Stromstärke im Lastkreis einen definierbaren Wert überschreitet, wobei die Steckdose einen Messsensor zur Erfassung der Einspeisung aufweist und die Einspeisung in die Steuerung des Schaltaktors mit einfließt. Wenn also der definierbare Wert sehr gering, im Wesentlichen bei 0A, ist, dann ist eine Einspeisung schlichtweg effektiv vermieden.

Bevorzugt korrespondiert der definierbare Wert bezüglich der aktuellen Stromstärke im Lastkreis zu einer maximalen Einspeisung mit einer Leistung im Bereich von weniger als 10W, insbesondere weniger als 1W, so dass jegliche, jedenfalls jede signifikante, Einspeisung einer solarenergieerzeugenden Einheit wirksam vermieden ist.

Der Kerngedanke der Erfindung besteht andererseits darin, dass zur optimierten Einspeisung auf einfache Weise das Überlasten der Leitung durch eine zu hohe Einspeisung einer solarenergieerzeugenden Einheit, die beispielsweise 1500W oder 2000W erzeugt, wirksam vermieden wird, indem die Steckdose an einen die Einspeisung regelnden Schaltaktor angeschlossen ist, wobei die Einspeisung vermieden wird, wenn die aktuelle Stromstärke im Lastkreis, die dann durch eine Messeinrichtung erfasst wird, einen definierbaren Wert überschreitet. Wird beispielsweise 2000W solare Leistung in den Lastkreis eingespeist, und es werden lediglich 1000W durch die Last abgefragt, dann ist die aktuelle Stromstärke im Lastkreis normgerecht unter 18,6A. Damit können - im Gegensatz zu auf maximal 600W begrenzte Balkonkraftwerken - die vollen 1000W, die durch die Last abgefragt werden, durch die solarenergieerzeugende Einheit bereitgestellt werden, also: deutlich mehr als die Grundlast. Dazu weist der Lastkreis eine Messeinrichtung auf, die die aktuelle Stromstärke im Lastkreis ermittelt.

Besonders geschickt wird im Rahmen der auf die optimierte Einspeisung gerichtete Erfindung damit die bis dato bei herkömmlichen Balkonkraftwerken vorgehalte Reserve im Lastkreis für die Einspeisung genutzt, wobei gleichzeitig sichergestellt ist, dass es zu keiner Zeit zu einer durch die Einspeisung bedingte Überlastung der Leitung kommt, indem die Steckdose an einen die Einspeisung regelnden Schaltaktor angeschlossen ist, wobei die Einspeisung vermieden wird, wenn die aktuelle Stromstärke im Lastkreis, die durch eine Messeinrichtung des Lastkreises erfasst wird, einen definierbaren Wert überschreitet.

Hierdurch wird es ermöglicht, höhere Spitzenleistungen der solarenergieerzeugenden Einheit (beispielsweise ein Balkonkraftwerk) zuzulassen, da die Leitungsreserve - sollte sie potentiell durch eine zu hohe Einspeisung angetastet werden - tatsächlich unangetastet bleibt, da die Einspeisung ausgeschaltet wird, indem die Einspeisung dank des an die Steckdose angeschlossenen Schaltaktors abgeschaltet wird. Daraus ergibt sich der Vorteil, Spitzenleistungen von über 600W in einen Lastkreis einzuspeisen, ohne dass das Kabel sich zu stark erwärmt und zudem der Einsatz kostspieliger Batterien vermieden wird und gleichzeitig ein substantiell über die Grundlast hinausgehender Leistungsbedarf abgedeckt werden kann, selbst bei Bewölkung.

Dabei ist gemäß einer besonders bevorzugten Ausgestaltung der erfindungsgemäßen Anordnung der definierbare Wert im Lastkreis beispielsweise so gewählt, dass dieser bezüglich der aktuellen Stromstärke im Lastkreis zu einer maximalen Einspeisung mit einer Leistung im Bereich von 800W bis 2500W, insbesondere 1200W bis 2000W, korrespondiert. Hierdurch ist es sichergestellt, dass typische Haushaltsgeräte am Lastkreis, die eine Leistungsaufnahme von 2800W bis 1100W, insbesondere 2400W bis 1600W, aufweisen, betrieben werden können und ein deutlich größerer Anteil der Leistung durch Solarenergie gedeckt werden kann, als es bei vorbekannten Balkonkraftwerken mit einer Spitzenleistung von 600W der Fall ist.

Dabei weist die Steckdose einen Messsensor zur Erfassung der Einspeisung auf, wobei die Einspeisung in die Steuerung des Schaltaktors mit einfließt. Somit kann eine Abschaltung der Einspeisung vorgenommen werden, wenn auf Basis des Messsensors zur Erfassung der Einspeisung zusammen mit der durch die Messeinrichtung bereitgestellten Stromstärke im Lastkreis tatsächlich ein Antasten der Leitungsreserve beziehungsweise ein Auslösen des Leistungsschutzschalters zu besorgen ist. Es versteht sich, dass durch die Berücksichtigung der eingespeisten Leistung bei Vorliegen der Stromstärke im Lastkreis ermittelbar ist, ob die Leistungsreserve angetastet wird. Wird beispielsweise eine Leistung von 2000W im Lastkreis durch die Last abgefragt (wobei im Falle der vorbeschriebenen "provisorischen" Abschaltung der Einspeisung diese Last komplett durch eine netzgebundene Energieversorgung zu bedienen wäre, da die Einspeisung über dem definierbaren Wert liegen würde), und die solarenergieerzeugende Einheit speist noch 1500W in den Lastkreis ein, fließt die Einspeisung in die Steuerung des Schaltaktors derart mit ein, dass die Summe der Stromstärke im Lastkreis und der Stromstärke durch die Einspeisung addiert werden und nur beim Überschreiten einer gewissen Grenze, bspw. 15 oder 15,5A, die Einspeisung abgeschaltet wird. Hierdurch kann eine Steigerung der Autarkie des Betreibers der erfindungsgemäßen Anordnung erreicht werden, da die eigentlich vorzuhaltene Leistungsreserve des Lastkreises auf intelligente Art und Weise mitbeansprucht wird, ohne das Kabel zu stark zu erwärmen.

In einer bevorzugten Ausführung der Erfindung bilden der Schaltaktor und die Steckdose eine Baueinheit, so dass die infrastrukturellen Änderungen zur Inbetriebnahme einer erfindungsgemäßen Anordnung möglichst minimiert werden.

In einer weiteren Ausführungsform der Erfindung umfasst die Steckdose einen Funksender, der die aktuelle Einspeisung und/oder den Status des Schaltaktors einem Endgerät, insbesondere einem mobilen Endgerät, zur Verfügung stellt, damit der Anwender möglichst komfortabel über die Betriebssituation informiert ist.

Gemäß einer weiteren Ausführungsform der Erfindung kommunizieren die Messeinrichtung und die Steckdose miteinander, insbesondere mit Blick auf den Status der Messeinrichtung und/oder die durch die Last aufgenommene Leistung. Hierdurch kann beispielsweise ein automatisches Wiedereinschalten der Einspeisung erfolgen, wenn die aktuelle Stromstärke im Lastkreis einen definierbaren Wert nach vorherigen Überschreiten diesen Wert unterschreiten sollte. Zudem erlaubt eine solche Kommunikation einen Defekt der Messeinrichtung zu erfassen, so dass die Einspeisung abgeschaltet wird.

Ferner betrifft die Erfindung ein System zur Regelung der Einspeisung einer solarenergieerzeugenden Einheit umfassend mindestens zwei erfindungsgemäße Anordnungen.

Ein solches System erlaubt einerseits eine Skalierbarkeit bis hin zu um mindestens eine Größenordnung größeren Peak-Leistungen verglichen mit klassischen Balkonkraftwerken, ohne einen intelligenten Stromzähler, der mit einem eine Schnittstelle aufweisenden (kostspieligen) Wechselrichter kommuniziert, einbauen zu müssen. Dieses geht mit einem Kosten- und Platzvorteil einher. Andererseits erlaubt ein solches System, eine Einspeisung effektiv grundsätzlich zu vermeiden.

Insofern stellt die vorliegende Erfindung eine universelle Plattform dar, von der aus ausgehend auf einfache Art und Weise eine Einspeisung entweder optimiert, insbesondere hinsichtlich höherer Peak-Leistungen, oder schlichtweg vermieden werden kann.

Nachfolgend ist die Erfindung unter Bezugnahme auf die beigefügten Figuren anhand eines Ausführungsbeispiels beschrieben. Es zeigt:
- **Fig. 1:**: eine erfindungsgemäße Anordnung zur Regelung der Einspeisung einer solarenergieerzeugenden Einheit,
- **Fig. 2:**: eine weitere erfindungsgemäße Anordnung zur Regelung der Einspeisung einer solarenergieerzeugenden Einheit,
- **Fig. 3:**: eine weitere erfindungsgemäße Anordnung zur Regelung der Einspeisung einer solarenergieerzeugenden Einheit, wobei die Steckdose einen Messsensor zur Erfassung der Einspeisung aufweist und die Einspeisung in die Steuerung des Schaltaktors mit einfließt,
- **Fig. 4:**: eine weitere erfindungsgemäße Anordnung zur Regelung der Einspeisung einer solarenergieerzeugenden Einheit, wobei die Anordnung mehrere solarenergieerzeugenden Einheiten aufweist, die an denselben Lastkreis angeschlossen sind und
- **Fig. 5:**: ein erfindungsgemäßes System umfassend mindestens zwei erfindungsgemäße Anordnungen

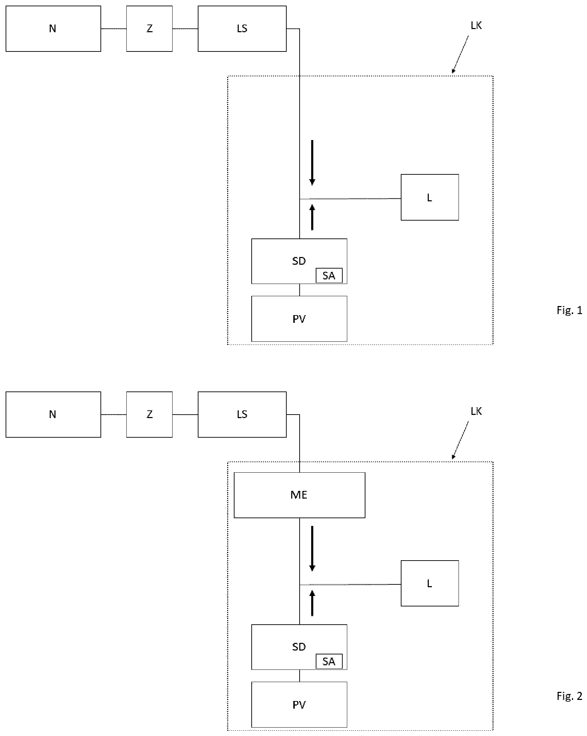

Figur 1 zeigt eine auf die Vermeidung der Einspeisung gerichtete erfindungsgemäße Anordnung zur Regelung der Einspeisung einer solarenergieerzeugenden Einheit PV mit einem (nicht dargestellten) Wechselrichter und eine daran angeschlossene, eine Einspeisung in einen Lastkreis LK ermöglichende, Steckdose SD. Die Anordnung umfasst zudem eine Netzversorgungsleitung N, die über einen Stromzähler Z und einen lastkreisspezifischen Leistungsschutzschalter LS in den Lastkreis LK mündet, wobei der Lastkreis LK keine Messeinrichtung ME, die als lastkreisspezifischer Zähler dient, aufweisen muss, die die aktuelle Stromstärke im Lastkreis LK ermittelt, da in dieser, typischerweise den Interessen eines Vermieters gerecht werdenden, Ausführung kein lastkreisspezifischer Zähler vorgesehen werden muss, da es dem Vermieter lediglich auf das Vermeiden einer Einspeisung ankommt.

Figur 2 zeigt eine auf die optimierte Einspeisung gerichtete erfindungsgemäße Anordnung zur Regelung der Einspeisung einer solarenergieerzeugenden Einheit PV mit einem (nicht dargestellten) Wechselrichter und eine daran angeschlossene, eine Einspeisung in einen Lastkreis LK ermöglichende, Steckdose SD. Die Anordnung umfasst zudem eine Netzversorgungsleitung N, die über einen Stromzähler Z und einen lastkreisspezifischen Leistungsschutzschalter LS in den Lastkreis LK mündet, wobei der Lastkreis LK eine Messeinrichtung ME, die als lastkreisspezifischer Zähler dient, aufweist, die die aktuelle Stromstärke im Lastkreis LK ermittelt.

Das Besondere an dieser Ausgestaltung der Erfindung besteht darin, dass die Steckdose SD an einen die Einspeisung regelnden Schaltaktor SA angeschlossen ist, wobei die Einspeisung vermieden wird, wenn die aktuelle Stromstärke im Lastkreis LK einen definierbaren Wert überschreitet.

Wird beispielsweise 2000 W solare Leistung in den Lastkreis LK eingespeist, und es werden lediglich 1000 W durch die Last L abgefragt, dann ist die aktuelle Stromstärke im Lastkreis LK normgerecht unter 16A. Damit können - im Gegensatz zu auf maximal 600 W begrenzte Balkonkraftwerken - die in diesem Beispielfall angenommenen vollen 1000W, die durch die Last L abgefragt werden, durch die solarenergieerzeugende Einheit PV bereitgestellt werden (da die solarenergieerzeugende Einheit PV entsprechend leistungsstark dimensioniert ist). Lediglich in Fällen, in denen zu besorgen ist, dass die aktuelle Stromstärke im Lastkreis LK 16A überschreitet, wird die Einspeisung abgeschaltet, was durch den definierbaren Wert nach Art einer Festlegung einer Schwelle durch den Anwender gewählt werden kann. In der dargestellten Ausführungsform bilden der Schaltaktor SA und die Steckdose SD eine Baueinheit, so dass die Infrastruktur besonders einfach und kompakt gehalten ist.

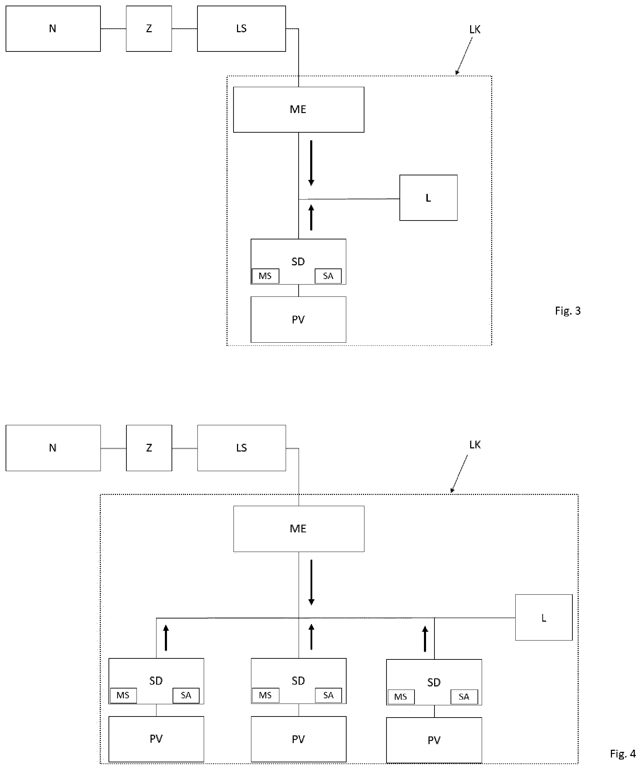

Figur 3 zeigt eine weitere erfindungsgemäße Anordnung zur Regelung der Einspeisung einer solarenergieerzeugenden Einheit PV, wobei die Steckdose SD zusätzliche einen Messsensor MS zur Erfassung der Einspeisung aufweist und die Einspeisung in die Steuerung des Schaltaktors SA mit einfließt. Ein solches Einfließen kann beispielsweise so ausgeführt sein, dass die Summe der Stromstärke im Lastkreis LK und der Stromstärke durch die Einspeisung addiert werden und nur beim Überschreiten einer gewissen Grenze, bspw. 15,5A, die Einspeisung abgeschaltet wird. Hierdurch kann eine Steigerung der Autarkie des Betreibers der erfindungsgemäßen Anordnung erreicht werden. Bevorzugt korrespondiert der definierbare Wert bezüglich der aktuellen Stromstärke im Lastkreis LK zu einer maximalen Einspeisung mit einer Leistung im Bereich von 800W bis 2500W, insbesondere 1200W bis 2000.

In Figur 4 ist eine weitere erfindungsgemäße Anordnung zur Regelung der Einspeisung einer solarenergieerzeugenden Einheit PV dargestellt, wobei die Anordnung mehrere solarenergieerzeugenden Einheiten PV aufweist, die an denselben Lastkreis LK angeschlossen sind. Hierdurch können beispielsweise unterschiedliche Himmelsrichtungen der solarenergieerzeugenden Einheiten PV abgebildet werden, beispielsweise wenn eine solarenergieerzeugende Einheit PV nach Osten, eine nach Süden und eine nach Westen ausgerichtet ist. Die einzige Voraussetzung ist dabei das Vorsehen eines gemeinsamen Lastkreises LK mit jeweils einer Steckdose SD, die an einen die Einspeisung regelnden Schaltaktor SA angeschlossen ist, wobei die Einspeisung vermieden wird, wenn die aktuelle Stromstärke im Lastkreis LK einen definierbaren Wert überschreitet.

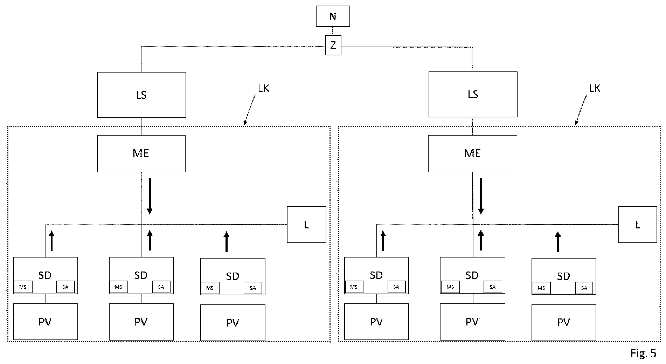

Figur 5 zeigt ein erfindungsgemäßes System umfassend mindestens zwei erfindungsgemäße Anordnungen. Hierdurch können beliebig große Peak-Leistungen erzeugt werden, so dass durch das erfindungsgemäße System sogar Peak-Leistungen konventioneller Photovoltaikanlagen auf Hausdächern erreichbar werden, die mit bisherigen Balkonkraftwerken nicht darstellbar waren.

Die Erfindung ist anhand mehrere Ausführungsbeispiele beschrieben. Ohne den Umfang der geltenden Ansprüche zu verlassen, ergeben sich für einen Fachmann zahlreiche weitere Möglichkeiten, diese umzusetzen, ohne dass dieses im Rahmen dieser Ausführungen im Einzelnen erläutert werden müsste.

### Bezugszeichenliste

- L: Last
- LK: Lastkreis
- LS: Leistungsschutzschalter
- ME: Messeinrichtung
- MS: Messsensor
- N: Netzversorgungsleitung
- PV: solarenergieerzeugende Einheit
- SA: Schaltaktor
- SD: Steckdose
- Z: Stromzähler

## Patentansprüche

1. Anordnung zur Regelung der Einspeisung einer solarenergieerzeugenden Einheit (PV) umfassend eine solarenergieerzeugende Einheit (PV) mit einem Wechselrichter und eine daran angeschlossene, eine Einspeisung in einen Lastkreis (LK) ermöglichende, Steckdose (SD) sowie ferner umfassend eine Netzversorgungsleitung (N), die über einen Stromzähler (Z) und eine einen lastkreisspezifischen Leistungsschutzschalter (LS) in den Lastkreis (LK) mündet, **dadurch gekennzeichnet, dass** die Steckdose (SD) an einen die Einspeisung regelnden Schaltaktor (SA) angeschlossen ist, wobei die Einspeisung vermieden wird, wenn die aktuelle Stromstärke im Lastkreis (LK) einen definierbaren Wert überschreitet, wobei die Steckdose (SD) einen Messsensor (MS) zur Erfassung der Einspeisung aufweist und die Einspeisung in die Steuerung des Schaltaktors (SA) mit einfließt.

2. Anordnung gemäß Anspruch 1, **dadurch gekennzeichnet, dass** der definierbare Wert bezüglich der aktuellen Stromstärke im Lastkreis (LK) zu einer maximalen Einspeisung mit einer Leistung im Bereich von weniger als 10W, insbesondere weniger als 1W korrespondiert, so dass jegliche, jedenfalls jede signifikante, Einspeisung einer solarenergieerzeugenden Einheit (PV) wirksam vermieden ist.

3. Anordnung gemäß Anspruch 1, **dadurch gekennzeichnet, dass** der Lastkreis (LK) eine Messeinrichtung (ME) aufweist, die die aktuelle Stromstärke im Lastkreis (LK) ermittelt.

4. Anordnung gemäß einem der Ansprüche 1 bis 3, **dadurch gekennzeichnet, dass** der Schaltaktor (SA) und die Steckdose (SD) eine Baueinheit ausbilden.

5. Anordnung gemäß einem der Ansprüche 3 oder 4, **dadurch gekennzeichnet, dass** der definierbare Wert bezüglich der aktuellen Stromstärke im Lastkreis (LK) zu einer maximalen Einspeisung mit einer Leistung im Bereich von 800W bis 2500W, insbesondere 1200W bis 2000W, korrespondiert.

6. Anordnung gemäß einem der Ansprüche 1 bis 5, **dadurch gekennzeichnet, dass** die Steckdose (SD) einen Funksender umfasst, der die aktuelle Einspeisung und/oder den Status des Schaltaktors (SA) einem Endgerät, insbesondere einem mobilen Endgerät, zur Verfügung stellt.

7. Anordnung gemäß einem der Ansprüche 3 bis 6, **dadurch gekennzeichnet, dass** die Messeinrichtung (ME) und die Steckdose (SD) miteinander kommunizieren, insbesondere mit Blick auf den Status der Messeinrichtung (ME) und/oder die durch die Last (L) aufgenommene Leistung.

8. System zur Regelung der Einspeisung einer solarenergieerzeugenden Einheit (PV) umfassend mindestens zwei Anordnungen gemäß einem der Ansprüche 1 bis 7.

9. System nach Anspruch 8, Anordnung gemäß einem der Ansprüche 3 bis 7, **dadurch gekennzeichnet, dass** durch mindestens eine Steuereinheit das Zusammenwirken der erfindungsgemäßen Anordnungen überwacht und geregelt wird, insbesondere zur Einhaltung einer maximalen Einspeisung ins Netz, beispielsweise 70% der installierten Peak-Leistung der solarenergieerzeugenden Einheit (PV).
